# EUROPÄISCHE PATENTANMELDUNG

(11) **EP 1 764 543 A2**
(43) Veröffentlichungstag der Anmeldung: **21.03.2007**
(21) Anmeldenummer: 06450122.4
(22) Anmeldetag: 06.09.2006
(51) Int. Cl.: F16M 11/24

(54) **Vorrichtung zur informationswiedergabe**

(30) Priorität: 14.09.2005 AT 6222005 U
(71) Anmelder: Funworld AG, 4860 Lenzing (AT)
(72) Erfinder: Öhlinger, Josef, 4813 Altmünster (AT)
(74) Vertreter: Sonn & Partner Patentanwälte

(57) **Zusammenfassung**

Vorrichtung (1) zur Informationswiedergabe, Unterhaltung und/oder Datenverarbeitung, mit zumindest einer verstellbar angebrachten Bildschirmeinheit (2), die an einer vertikalen Tragsäule (4) über einen mit der Tragsäule verbundenen, von dieser seitlich abstehenden horizontalen Tragarm (3) seitlich auskragend und höhenverstellbar angeordnet ist, und mit einer Eingabeeinrichtung, wobei die Tragsäule (4) in einem Sockelgehäuse (6) gelagert und über eine Antriebseinheit (28) höhenverstellbar ist, und wobei die Bildschirmeinheit (2) direkt an dem fest mit der Tragsäule (4) verbundenen horizontalen Tragarm (3) um dessen Achse neigbar gelagert ist.

## Beschreibung

Die Erfindung betrifft eine Vorrichtung zur Informationswiedergabe, Unterhaltung und/oder Datenverarbeitung, mit zumindest einer verstellbar angebrachten Bildschirmeinheit, die an einer vertikalen Tragsäule über einen mit der Tragsäule verbundenen, von dieser seitlich abstehenden horizontalen Tragarm seitlich auskragend und höhenverstellbar angeordnet ist, und mit einer Eingabeeinrichtung.

Aus der EP 1 111 571 A ist eine Vorrichtung bekannt, die insbesondere als Unterhaltungs-Vorrichtung, zum Spielen von Computerspielen, ausgebildet ist, und die eine konvexe Vorderseite hat, in der auch die Bildschirmeinheit integriert ist. Unterhalb der Bildschirmeinheit befinden sich weitere Einrichtungen, wie etwa ein Kartenleser, eine Münzeinwurfeinrichtung und dgl. Einrichtungen. Diese Ausbildung bringt mit sich, dass diese Vorrichtung bzw. deren Eingabeeinrichtungen nur im Stehen bedient werden kann bzw. können, nicht jedoch im Sitzen, da der Unterteil der Vorrichtung den Beinen einer sitzenden Person im Weg steht. Dies ist insbesondere dann von Nachteil, wenn die Vorrichtung als Unterhaltungsgerät, beispielsweise in der Art eines Spielautomaten, zum Spielen eines Computerspiels etc., ausgebildet ist, wobei dann die Vorrichtung für eine längere Zeit von einer Person in Betrieb genommen und bedient wird. Hierzu wäre es zweckmäßig, zur Bedienung bzw. zum Betrachten der wiedergegebenen Informationen auf einem Sessel oder Hocker sitzen zu können.

In der US 5 630 566 A und US 6 796 536 B sind insbesondere für Bettlägrige gedachte Gestellkonstruktionen für Computereinrichtungen, insbesondere einen Laptop, gezeigt, wobei die Bildschirmeinheit (sowie die Tastatur) seitlich auskragen an einer Tragsäule befestigt ist. Gemäß der US 5 630 566 A sind dabei Gelenkarme vorgesehen, die an der Tragsäule in der Höhe verstellbar angeordnet sind; gemäß der US 6 796 536 A ist die Tragsäule des Gestelles teleskopartig ausziehbar, und sie trägt über eine horizontalen Tragarm einen Gelenkarm, der seinerseits eine Konsole für einen Laptop abstützt. In beiden Fällen ist unterhalb der eigentlichen Computereinrichtungen Platz, so das beispielsweise für einen Bettlägrigen ein Arbeiten mit dem Computer ermöglicht wird. Die bekannten Trageinrichtungen sind jedoch relativ instabil.

Letzteres trifft auch auf die Arbeitsstation gemäß der WO 01/15570 A zu, wo eine Teleskopsäule über drei Füße auf dem Boden abgestützt wird und über einen seitlich abstehenden Schwenkarm eine Plattform für eine Bildschirmeinheit trägt. Diese Bildschirmeinheit ist in dieser Ausführungsform überdies nicht um eine horizontale Achse vor/zurück neigbar, sondern nur um vertikale Achsen schwenkbar.

In der US 6 098 936 A und US 4 638 969 A sind schließlich weitere Konstruktionen mit einer Anordnung von Bildschirmeinheiten an von einer Tragsäule seitlich auskragenden Stützarmen gezeigt, wobei beispielsweise gemäß der US 4 638 969 A ein Vor- und Zurückneigen der Bildschirmeinheit mit Hilfe einer liegenden Achse möglich ist, die in einem U-förmigen Bügel mit Schrauben fixiert ist; der U-förmige Bügel ist über eine Abstützung 27 mit dem horizontalen Tragarm fest verbunden; insofern liegt auch hier eine aufwendige, nichtsdestoweniger, wenig stabile Konstruktion vor.

Die Vorrichtung gemäß der Erfindung soll nicht nur als Spiel- oder Unterhaltungsgerät, sondern auch zur Informationswiedergabe oder Datenverarbeitung eingesetzt werden können, wobei insbesondere auch Anwendungen auf öffentlichen Plätzen, Flughäfen, in Hotels oder auf Bahnhöfen, etwa zur Auskunft über Ankunft- oder Abfahrts- bzw. Abflugszeiten, für Fahrkartenausgaben, Informationswiedergaben und dgl. denkbar sind. Auch eine Verwendung als Musikautomat oder Zeiterfassungssystem wäre möglich. Ganz allgemein soll die gegenständliche Vorrichtung praktisch überall einsetzbar sein, wo eine Interaktion zwischen einem Benützer und der Vorrichtung stattfinden soll. Die Vorrichtung kann demgemäß mit eigener Intelligenz, also mit einem eingebauten Computer, oder aber auch bloß als Terminal mit einer Verbindung zu einem Zentralrechner ausgeführt sein.

Bei der vorliegenden Vorrichtung wird nun angestrebt, eine gute Bedienbarkeit und Ablesbarkeit von Informationen an der Bildschirmeinheit sicherzustellen, ohne dass Verrenkungen des Benützers erforderlich sind. Dieses Problem ist insbesondere bei einer Ausbildung als elektronisches Unterhaltungsgerät, wie bereits vorstehend angedeutet, gravierend, es ist aber auch bei den anderen Einsatzzwecken gegeben.

Aufabe der Erfindung ist es daher, eine Vorrichtung der eingangs angeführten Art so auszubilden, dass eine optimale Bedienbarkeit und Gewinnung von Informationen durch Ablesen an der Bildschirmeinheit ohne Verdrehen des Körpers oder Kopfes ermöglicht wird, wobei nichtsdestoweniger eine Benützung der Vorrichtung im Sitzen möglich sein soll. Weiters ist es im Rahmen dieses allgemeinen Ziels auch Aufgabe der Erfindung, für verschiedene Benützungsmöglichkeiten auch eine entsprechende Anpassung der Bildschirmeinheit zu ermöglichen, so dass eine Bedienung nicht nur im Sitzen, sondern auch im Stehen in komfortabler Weise ermöglicht wird. Nichtsdestoweniger sollen die Konstruktion und der Zusammenbau der Vorrichtung möglichst einfach, dabei aber stabil im Betrieb sein, und die Vorrichtung soll sich auch durch ein ansprechendes Aussehen auszeichnen.

Die erfindungsgemäße Vorrichtung der eingangs angeführten Art zeichnet sich demgemäß vor allem dadurch aus, dass die Tragsäule in einem Sockelgehäuse gelagert und über eine Antriebseinheit höhenverstellbar ist, und dass die Bildschirmeinheit direkt an dem fest mit der Tragsäule verbundenen horizontalen Tragarm um dessen Achse neigbar gelagert ist.

Dadurch, dass bei der vorliegenden Vorrichtung die Bildschirmeinheit im montierten Zustand seitlich einer aufrechten Tragsäule angeordnet ist, kann problemlos ausreichend Raum unterhalb der Bildschirmeinheit vorgesehen werden, so dass dort die Beine einer vor der Bildschirmeinheit sitzenden Person Platz finden können. Die Bildschirmeinheit selbst kann beispielsweise, wie an sich bekannt, um eine horizontale Achse verschwenkbar sein, um je nach Größe der Person, die mit der Vorrichtung beschäftigt ist, eine adäquate Lage des Bildschirms relativ zum Kopf des Benützers zu ermöglichen, so dass die darauf wiedergegebenen Informationen optimal, ohne Spiegelungen und ohne Kopfverdrehungen, abgelesen werden können. Um das freie seitliche Auskragen der Bildschirmeinheit zu erzielen, ist die Bildschirmeinheit an einem mit der vertikalen Tragsäule verbundenen, von dieser seitlich abstehenden horizontalen Tragarm angeordnet. Dabei ist zur Erzielung der Schwenkverstellung die Bildschirmeinheit einfach direkt auf dem Tragarm verschwenkbar gelagert.

Diese Schwenklagerung der Bildschirmeinheit auf den Tragarm ist besonders einfach realisierbar, wobei auch eine schwergängige Lagerung eines Lagerteils der Bildschirmeinheit auf dem zylindrischen Tragarm oder einem zylindrischen Lagerteil des Tragarms vorgesehen werden kann, so dass die Bildschirmeinheit von selbst in der jeweils eingestellten Schwenkposition am Tragarm, aufgrund der Schwergängigkeit, fixiert bleibt.

Zusätzlich zu dieser Schwenkverstellung der Bildschirmeinheit ist auch eine Höhenverstellung vorgesehen, wobei hierfür die vertikale Tragsäule selbst in der Höhe verstellbar angeordnet ist; hierbei ist die Tragsäule mit ihrem unteren Teil, in einem Sockelgehäuse gehalten, wodurch eine kompakte, stabile Ausbildung sowie eine eigenständige, insbesondere mobile Aufstellung der Vorrichtung ermöglicht wird. Die Verwendung eines Sockelgehäuses ist insbesondere dann günstig, wenn die Vorrichtung wie erwähnt mit eigener Intelligenz ausgerüstet wird, da in diesem Sockelgehäuse die entsprechenden elektronischen Einheiten untergebracht werden können, wie nachstehend noch näher ausgeführt werden wird.

Für die Höhenverstellung der Tragsäule ist eine Antriebseinheit vorhanden, die insbesondere einen Spindeltrieb, aufweist, so dass eine komfortable Bedingung ermöglicht ist. Die Antriebseinheit wird dabei zweckmäßig mit einem Elektromotor realisiert, dem eine entsprechende Steuerung zugeordnet wird, um so durch Betätigung eines "Auf"-Schalters oder "Ab"-Schalters ein Hochfahren oder Abwärtsfahren der Tragsäule zu bewerkstelligen.

Die Antriebseinheit, nämlich insbesondere ein Elektromotor mit Spindeltrieb, kann als eigenständiges, gesondertes Modul ausgeführt und im Sockelgehäuse untergebracht sein, so dass eine Vorfertigung des Moduls und ein Einbau des fertigen Moduls im Gehäuse ermöglicht wird, was die Montage der Vorrichtung erleichtert.

Wie bereits angedeutet kann die vorliegende Vorrichtung mit entsprechenden Einrichtungen für besondere Verwendungen, insbesondere als Unterhaltungs- oder Spielgerät, ausgerüstet werden, und dementsprechend können im Sockelgehäuse eine Computereinheit, eine Geldeingabeeinheit mit Münzprüfung etc., wie an sich bekannt, und dgl. Einheiten untergebracht werden. Diese Einheiten, wie insbesondere die Computereinheit bzw. die Geldeingabeeinheit oder Münzautomateinheit, werden für eine vereinfachte Montage wiederum bevorzugt in Modulbauweise ausgeführt.

Um eine Abstellfläche für verschiedene Gegenstände, wie schriftliche Unterlagen, Bücher, aber auch Gläser, Aschenbecher und dgl., zu erzielen, kann das Sockelgehäuse an seiner Oberseite eine Tischplatte aufweisen, die eine Durchtrittsöffnung für die Tragsäule enthält.

Weiters ist es, auch zur Erhöhung der Stabilität der aufgestellten Vorrichtung, aber auch zur Erzielung einer Fußaufstellfläche, weiters von Vorteil, wenn das Sockelgehäuse bodenseitig mit einer seitlich wegragenden Bodenplatte versehen ist. Dabei ist es insbesondere günstig, wenn die Bodenplatte eine z.B. durch Kantung vorgesehene Fußstütze aufweist.

Zur Erzielung einer leichten Verschiebbarkeit der Vorrichtung ist es auch von Vorteil, wenn das Sockelgehäuse zumindest an einer Bodenkante zumindest eine drehbar gelagerte Rolle oder dgl., vorzugsweise zwei Rollen, aufweist.

Um im Hinblick auf die seitlich auskragende Anordnung der Bildschirmeinheit eine besonders zweckmäßige Form der Eingabeeinrichtung sicherzustellen, ist es vorteilhaft, wenn die Bildschirmeinheit einen Touchscreenmonitor aufweist; an sich wäre es auch denkbar, die Bildschirmeinheit mit einer integrierten Tastatur zu versehen, jedoch kann sich diese für viele Anwendungen, insbesondere bei einer Ausbildung der Vorrichtung als Unterhaltungsgerät oder Spielautomat, im Hinblick auf das Vorsehen eines Touchscreenmonitors erübrigen. Es wird dann eine besonders kompakte Form der Bildschirmeinheit erzielt.

Die Bildschirmeinheit kann weiters einen integrierten Lautsprecher und/oder eine integrierte Bildaufnahmeeinheit, insbesondere Videokamera bzw. Webcam, enthalten, und sie kann auch mit einem zugehörigen Kontroller sowie gegebenenfalls mit weiteren Komponenten als eigenständiges Modul ausgeführt sein.

Für eine leichte, dennoch sichere Montage kann die Bildschirmeinheit schließlich mit Hilfe eines Schlosses am Tragarm gesichert sein, wodurch eine unbefugte Abnahme der Bildschirmeinheit verhindert wird, andererseits aber bei Betätigung des Schlosses auch ein einfaches Abnehmen bzw. Abziehen der Bildschirmeinheit vom Tragarm möglich ist.

Die Erfindung wird nachfolgend anhand von in der Zeichnung veranschaulichten bevorzugten Ausführungsbeispielen, auf die sie jedoch nicht beschränkt sein soll, noch weiter erläutert. In der Zeichnung zeigen im Einzelnen:
Fig. 1 eine schaubildliche Darstellung einer erfindungsgemäßen Vorrichtung, die in diesem Beispiel als Spiel- bzw. Unterhaltungsgerät ausgeführt ist;
die Fig. 2 und 3 Vorderansichten dieser Vorrichtung, wobei die Bildschirmeinheit der Vorrichtung in Fig. 2 im eingefahrenen Zustand und in Fig. 3 im ausgefahrenen Zustand veranschaulicht ist;
Fig. 4 eine der Fig. 2 vergleichbare Vorderansicht der Vorrichtung, jedoch mit abgenommener Gehäuse-Vorderwand;
die Fig. 5 und 6 Seitenansichten der Vorrichtung mit eingefahrener (Fig. 5) bzw. ausgefahrener (Fig. 6) Bildschirmeinheit, wobei eine Seitenwand des Sockelgehäuses der Vorrichtung zwecks Veranschaulichung der Antriebseinheit für die die Bildschirmeinheit tragende Tragsäule weggenommen wurde; und
die Fig. 7 und 8 je eine Schnittdarstellung gemäß der Linie VII-VII in Fig. 3, zur Veranschaulichung der Schwenklagerung der Bildschirmeinheit an einem mit der Tragsäule fest verbundenen horizontalen Tragarm, wobei die Bildschirmeinheit in zwei verschiedenen Schwenkpositionen gezeigt ist.

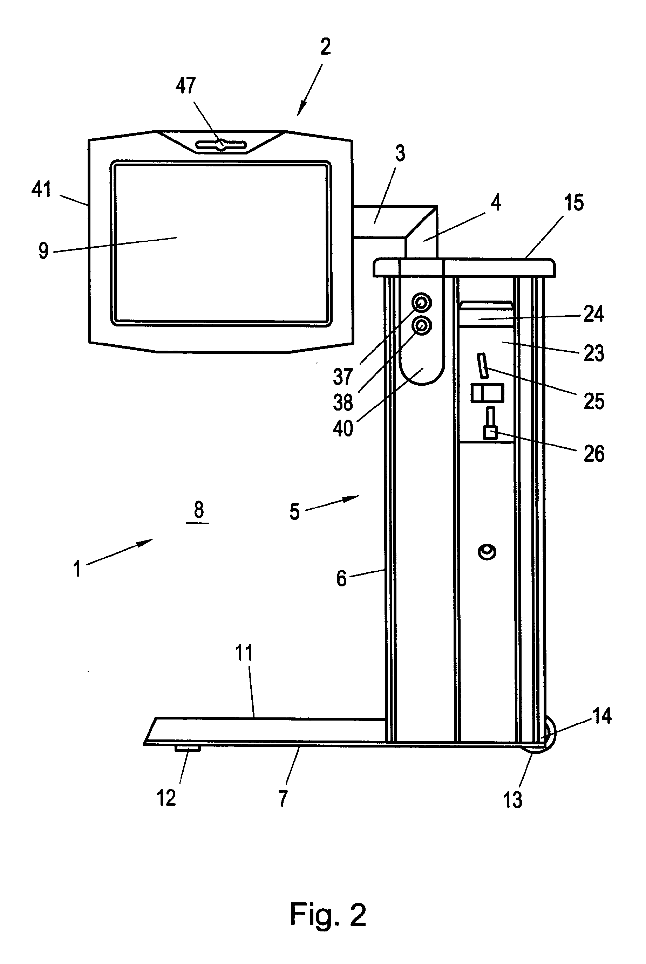

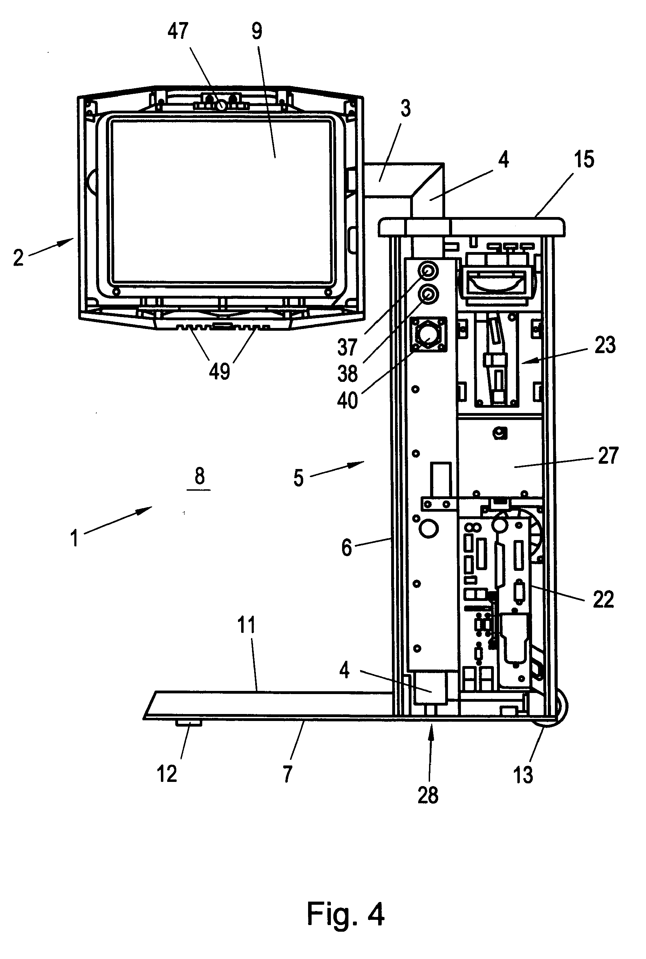

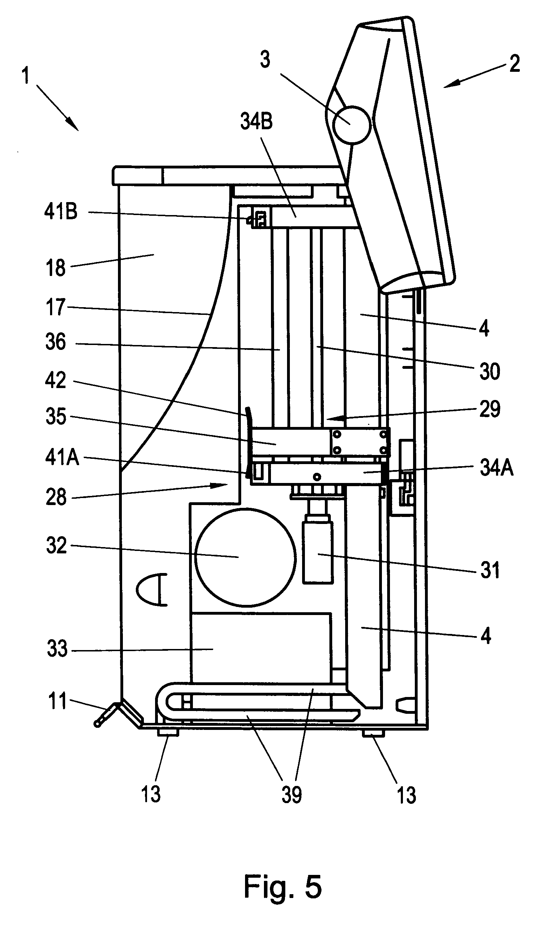

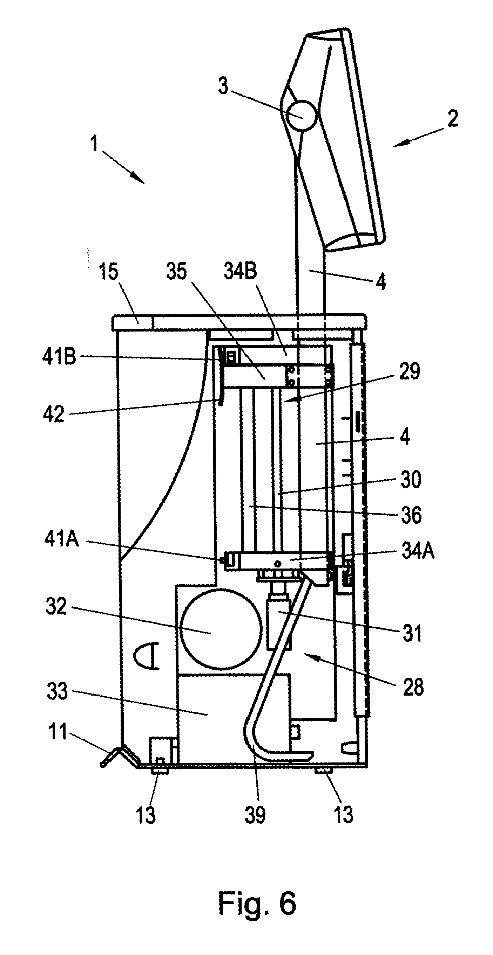

In der Zeichnung ist eine als Spiel- oder Unterhaltungsgerät ausgeführte Vorrichtung 1 ersichtlich, die eine kompakte Bildschirmeinheit 2 aufweist, welche über einen horizontalen Tragarm 3 frei auskragend mit einer vertikalen Tragsäule 4 verbunden ist. Die Tragsäule 4 ist in einem Sockel 5, der als Sockelgehäuse 6 ausgeführt ist, vertikal verschiebbar angeordnet, wie nachstehend anhand der Fig. 4 im Einzelnen noch näher erläutert werden wird. Das Sockelgehäuse 6 ist zur Aufstellung auf dem Boden eines Raumes gedacht, und bodenseitig erstreckt sich vom Sockelgehäuse 6 weg eine Bodenplatte 7, die der Vorrichtung 1 bei der Aufstellung mit der seitlich auskragenden Bildschirmeinheit 2 eine zusätzliche Stabilität verleiht, da diese Bodenplatte 7 auf der selben Seite vom Sockelgehäuse 6 weg steht wie die Bildschirmeinheit 2. Zwischen der seitlich auskragenden Bildschirmeinheit 2 und der unteren Bodenplatte 7 ist, wie insbesondere aus Fig. 2 bis 4 ersichtlich ist, ein ausreichender freier Raum 8 gegeben, so dass eine Person, die die Vorrichtung 1 bedient, problemlos vor dieser Vorrichtung 1 (gemäß der Darstellung in Fig. 5 oder 6 auf der rechten Seite hiervon) auf einem Sessel, Hocker oder dgl. Sitzmöbel oder auch auf einem Rollstuhl sitzen kann, wobei nichtsdestoweniger eine direkte, geradlinige Blickrichtung zum Bildschirm 9 der Bildschirmeinheit 2 gegeben ist. Der Bildschirm bzw. die Monitoreinheit 9 der Bildschirmeinheit 2 ist dabei bevorzugt als Touchscreen-Monitoreinheit ausgeführt, so dass auch eine direkte Eingabe am Bildschirm 9 ohne Körperverrenkungen oder Kopfverschwenkungen im Fall einer vor der Bildschirmeinheit 2 sitzenden Person möglich ist.

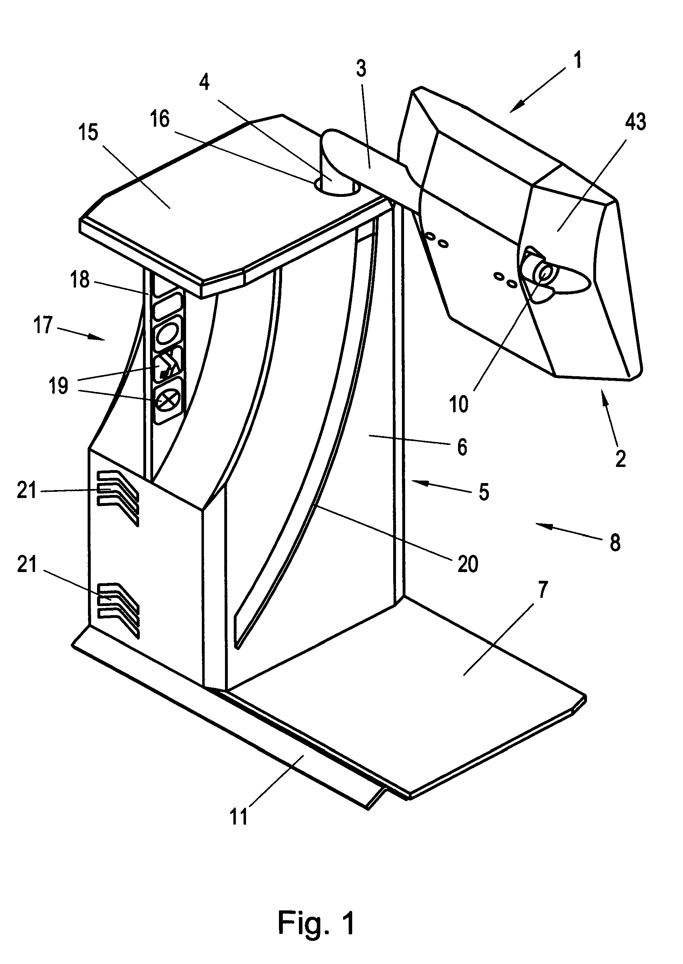

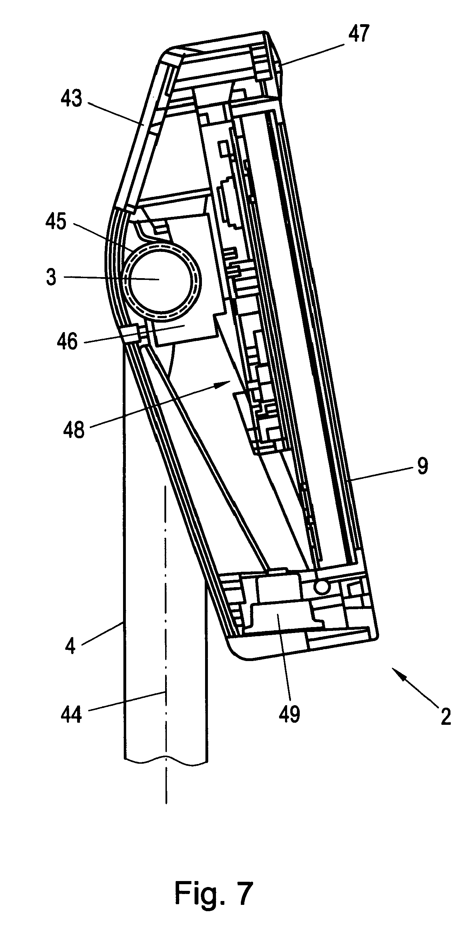

Die Bildschirmeinheit 2 ist über ein Schloss 10 (s. Fig. 1) am Tragarm 3 gesichert, sie kann jedoch bei Entsperren des Schlosses 10 einfach vom Tragarm 3 abgenommen und auch einfach auf dem Tragarm 3 durch Aufschieben montiert werden, wobei sie nach der Montage durch das Schloss 10 gesichert wird. Die Schwenklagerung der Bildschirmeinheit 2 am Tragarm 3 wird nachfolgend noch näher anhand der Fig. 7 erläutert werden.

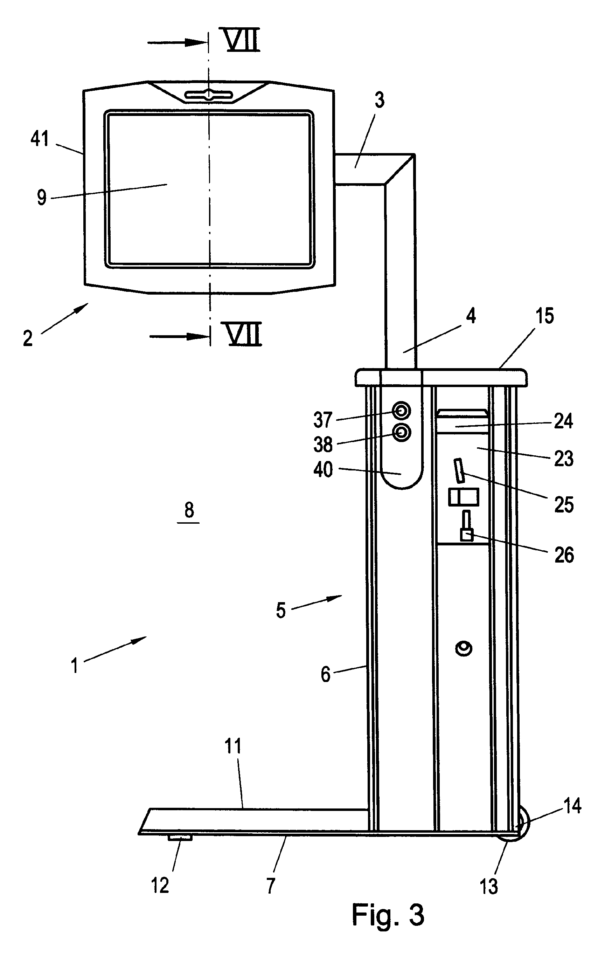

Die Bodenplatte 7 hat an ihrem hinteren Längsrand im Anschluss an das Sockelgehäuse 6 eine winkelförmige Kantung als Fußstütze 11, vgl. Fig. 1 bis 6. Weiters kann die Bodenplatte 7, wenn sie nicht direkt auf dem Boden des Aufstellplatzes aufliegen soll, mit Auflagefüßen 12 versehen sein, welche beispielsweise als aufgeklebte Kunststoffteile ausgebildet sein können. Diese Füße 12, vgl. Fig. 2 bis 4, können die Bodenplatte 7 sowie die Unterseite des Sockelgehäuses 6 im Abstand vom Boden halten, wobei diese Distanzhaltung außer durch die Füße 12 auch durch Rollen 13 realisiert wird, die an der gegenüberliegenden, d.h. von der Bodenplatte 7 abgewandten Seite des Sockelgehäuses 6 an dessen unterer Bodenkante 14 (s. Fig. 2 und 3) angeordnet sind. Vorzugsweise werden dabei zwei derartige Rollen 13, je eine in einem Eckbereich 14 des Sockelgehäuses 6, angeordnet, und diese Rollen 13 ermöglichen ein Verfahren der Vorrichtung 1 auf dem Boden unter Kippen des Sockelgehäuses 6, gemäß der Darstellung in Fig. 2 um die Rollen 13 nach rechts, im Uhrzeigersinn.

Das Sockelgehäuse 6 hat an seiner Oberseite eine Tischplatte 15, s. Fig. 1, die eine Durchtrittsöffnung 16 für den Durchgang der Tragsäule 4 der Bildschirmeinheit 2 unter Abdichtung (z.B. mittels einer nicht näher ersichtlichen Lippendichtung) aufweist und im Übrigen dazu dient, eine Abstellfläche für Unterlagen bzw. Gegenstände, wie Gläser, Aschenbecher, Bücher, schriftliche Vorlagen und dgl. zu schaffen. Die Tischplatte 15 steht an der Rückseite der Vorrichtung 1 über das dort eine Verjüngung 17 aufweisende Sockelgehäuse 6 vor, und unter der Tischplatte 15 ist im durch die Verjüngung 17 erhaltenen freien Raum eine vertikale Platte oder Leiste 18 vorgesehen, die beispielsweise mit beleuchteten Flexi-Designelementen 19 versehen ist. In ähnlicher Weise ist gemäß Fig. 1 an zumindest einer Seitenwand des Sockelgehäuses 6 ein beispielsweise bogenförmiges, beleuchtetes Designelement 20 vorgesehen.

An der Rückseite des Sockelgehäuses 6 sind schließlich noch aus Fig. 1 ersichtliche Lüftungsöffnungen 21 angebracht, um eine über ein nicht näher dargestelltes Gebläse bewerkstelligte Luftkühlung einer in Modulbauweise ausgeführten Computereinheit oder -box 22 (die in Fig. 4 nur schematisch angedeutet und an sich herkömmlich ausgebildet ist) zu ermöglichen.

Die Computereinheit 22 ist im Hinblick darauf, dass die vorliegende Vorrichtung 1 mit einer eigenen Intelligenz, zwecks Realisierung eines Unterhaltungsgeräts oder Spielautomaten, ausgestattet ist, im Sockelgehäuse 6 vorgesehen, ebenso wie eine aus Fig. 2, 3 und 4 ersichtliche Geldeingabeeinheit 23, die ebenfalls in Modulbauweise ausgeführt ist und einen Eingabeschlitz 24 für Banknoten sowie einen Münzeinwurfschlitz 25 und einen Münzen-Rückgabeschlitz 26 in an sich üblicher Weise aufweist. Unterhalb dieses Geldeingabemoduls 23 befindet sich in ebenfalls an sich herkömmlicher Weise eine Kassa 27, in der das eingeworfene Geld gesammelt wird, vgl. Fig. 4.

Gemäß Fig. 5 und 6 (s. auch Fig. 4) ist im Inneren des Sockelgehäuses 6 weiters eine für die Höhenverstellung der Tragsäule 4 mit der Bildschirmeinheit 2 vorgesehene, ebenfalls in Modulbauweise ausgeführte Verstelleinrichtung, insbesondere Antriebseinheit 28 untergebracht. Diese Antriebseinheit 28 ist beispielsweise mit einem Spindeltrieb 29 ausgeführt, wobei eine Gewinde-Spindel 30 von einem Motor 31, gegebenenfalls über ein im Motorgehäuse eingebautes, in der Zeichnung nicht näher ersichtliches Getriebe, angetrieben wird. Der Motor 31 ist als Elektromotor ausgeführt, dem eine Stromversorgungseinheit 32 mit einem Transformator und/oder Schaltnetzteil sowie weiters eine Steuerung 33 zugeordnet sind. Der Motor 31 ist an einem im Sockelgehäuse 6 innerhalb der modulartigen Antriebseinheit 28 fest angeordneten unteren Lagerblock 34A angebracht, der von der Spindel 30 durchsetzt wird und diese drehbar lagert. Am oberen Ende ist die Spindel 30 in einem weiteren, oberen Lagerblock 34B, der fest im Sockelgehäuse 6 angebracht ist, drehbar gelagert. Die Spindel 30 durchsetzt weiters eine Gewinde-Bohrung mit entsprechendem Innengewinde eines Spindelmutter-Blocks 35, welcher fest mit der als Rohr ausgebildeten Tragsäule 4 verbunden ist. Überdies enthält die Antriebseinheit 28 eine Führungsstange 36 zur Führung des Spindelmutter-Blocks 35 und der Tragsäule 4 bei der Auf-und Abbewegung.

In Betrieb der Antriebseinheit 28 treibt der Motor 31 somit die Spindel 30 drehend an, und durch den Gewindeeingriff wird der Spindelmutter-Block 35 längs der rotierenden Spindel 30 auf oder ab bewegt. Diese vertikale Bewegung des Spindelmutter-Blocks 35 wird zusätzlich durch die Führungsstange 36 geführt. Zusammen mit dem Spindelmutter-Block 35 bewegt sich auch die Tragsäule 4 entsprechend auf oder ab, so dass die gewünschte Höhenverstellung der Bildschirmeinheit 2 in stabiler Weise über die Tragsäule 4 bewerkstelligt werden kann. Beispielsweise wird vorgesehen, dass die Bildschirmeinheit 2 aus einer in Fig. 1, 2 und 5 ersichtlichen untersten Position um 30 cm in der Höhe nach oben verstellt werden kann, wobei die obere Position in Fig. 3 und 6 gezeigt ist.

Zur Steuerung der Höhenverstellung sind an der Vorderseite des Sockelgehäuses 6 im oberen Bereich benachbart dem Raum 8 für die sitzende Person zwei Bedientasten 37 (beispielsweise für die Aufwärtsbewegung der Tragsäule 4) und 38 (für die Abwärtsbewegung der Tragsäule 4) vorgesehen, wobei diese Bedientasten 37, 38 mit der Motor-Steuerung 33 über in der Zeichnung nicht näher gezeigte elektrische Leitungen verbunden sind.

Die als Rohr ausgeführte hohle Tragsäule 4 nimmt in ihrem Inneren Kabel 39 für die Versorgung der Bildschirmeinheit 2 auf. Die Kabel 39 verlaufen von der vertikalen Tragsäule 4 sodann in den ebenfalls als Rohr ausgebildeten horizontalen Tragarm 3 und von dort zu entsprechenden Anschlüssen in der Bildschirmeinheit 2, wobei diese elektrische Verbindung mit ausreichend beweglichen Kabeln an sich herkömmlich sein kann und daher in der Zeichnung nicht näher dargestellt ist.

An der Vorderseite des Sockelgehäuses 6 befindet sich weiters im Bereich unterhalb der Bedientasten 37, 38 noch ein Transpondersystem 40, s. Fig. 2, 3 und 4. Dieses Transpondersystem 40 wird zur Erleichterung der Anmeldung für diverse Dienste für registrierte Benützer verwendet.

Die Höhenverstell-Antriebseinheit 28 wird als eigenständiges Modul im Sockelgehäuse 6 beispielsweise durch Verschrauben fixiert. Bei der beschriebenen Höhenverstellung der Tragsäule 4 mit der elektrischen bzw. elektromechanischen Antriebseinheit 28 ist es weiters auch einfach möglich, ein etwaiges Verklemmen der Tragsäule 4 durch eine Überlasterfassung bzw. durch Bewegungssensoren festzustellen, wobei dann der Antrieb abgeschaltet und gegebenenfalls eine Alarmeinrichtung, insbesondere eine Blinklampe oder dgl., eingeschaltet werden kann. Um ein unbefugtes Bedienen bei der Höhenverstellung zu verhindern, beispielsweise durch Betätigen der Auf- und Abbedientasten ohne Münzeinwurf etc., ist es möglich, nur eine vorgegebene Anzahl von Höhenverstellungen nach Geldeinwurf zu erlauben und danach die Höheverstellugen durch die Steuerung 33 zu sperren; ein erneutes Betätigen der Höhenverstell-Antriebseinheit 28 kann nur nach neuerlichem Einwerfen von Geld, nach Zeitablauf, wieder erfolgen. Denkbar ist aber auch eine totale Sperrung der Antriebseinheit 28 oder aber eine allgemeine Freischaltung. Wie im Fall der anderen Module 22, 23, 27 ist auch im Fall des Antriebseinheits-Moduls 28 ein einfacher Ausbau, etwa zu Reparatur- oder Wartungszwecken, nach Abnehmen der seitlichen Abdeckung möglich. Bevorzugt werden zum Ausbau der verschiedenen weiteren Module 22, 23, 27 keine Werkzeuge benötigt. Diese Module können einfach durch Einschieben in entsprechende Aufnahmen im Gehäuse 6, gegebenenfalls mit Schnappverriegelung und dgl., wie an sich bekannt, fixiert werden.

Die Geldeingabeeinheit 23 kann je nach Bedarf die verschiedensten Konfigurationen aufweisen bzw. Komponenten enthalten, wobei die Komponenten auch tauschbar sein können. Mögliche Eingabeeinheiten sind z.B. Münzprüfer, Notenleser, aber auch Chipkartenleser usw. Die Kassa 27 wird bevorzugt so angeordnet, dass sie durch ein zusätzliches Schloss vom Technikbereich getrennt ist und gesondert entfernt werden kann.

Durch die seitlich freie Aufhängung der Ein- und Ausgabeeinrichtung, also der Bildschirmeinheit 2 mit dem Touchscreenmonitor 9, mit Verstellungsmöglichkeit wird es dem Benützer ermöglicht, die Vorrichtung 1 an gegebene Sitzgelegenheiten anzupassen und die Vorrichtung 1 frei und ohne Verrenkungen zu erreichen und zu bedienen; dies ist in gleicher Weise auch Rollstuhlfahrern möglich.

Wie erwähnt, kann die vertikale Tragsäule 4 und damit die Bildschirmeinheit 2 in vertikaler Richtung bevorzugt aus der untersten Stelle um z.B. 30 cm vertikal nach oben verstellt werden, wobei im Fall eines Spindeltriebes 29 wie beschrieben oder einer vergleichbaren Antriebseinheit 28 eine - bevorzugt - stufenlos variable Höhenverstellung ermöglicht wird. Es ist auch denkbar, die Motorsteuerung 33 mit Endschaltern zu verbinden, um die Tragsäule 4 in der unteren und oberen Position selbsttätig anzuhalten. Derartige Endschalter sind in Fig. 5 und 6 bei 41A und 41B schematisch veranschaulicht. Diese Endschalter 41A, 41B wirken mit einem am Spindelmotor-Block 35 angebrachten seitlichen Schaltelement 42 zusammen.

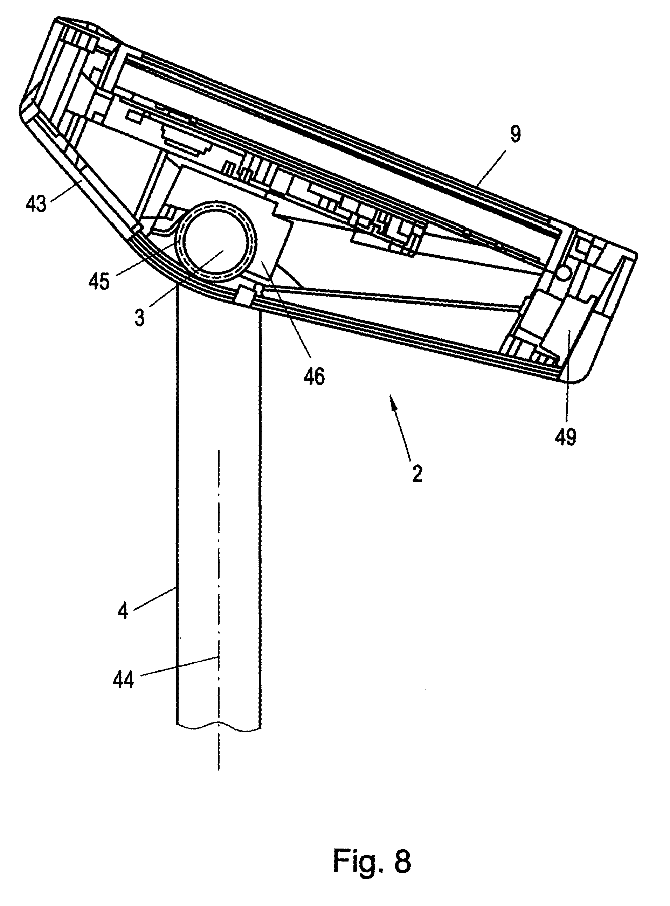

Die Bildschirmeinheit 2 selbst mit einem Gehäuse 43, in dem der Touchscreenmonitor 9 angeordnet ist, ist direkt um den horizontalen Tragarm 3 schwenkbar angeordnet, wobei beispielsweise eine Verschwenkung der Bildschirmebene im Bereich von 10° bis 65°, bezogen auf eine vertikale Ebene 44, (vgl. die Darstellungen in Fig. 7 und 8) denkbar ist. Mit diesen Verstellmöglichkeiten bietet die Vorrichtung 1 dem Benützer in jeder Position, ob sitzend oder stehend, und für jede Körpergröße den gewünschten Bedienungskomfort.

Wie im Einzelnen aus Fig. 7 und 8 ersichtlich ist, ist der horizontale Tragarm 3 in Lagerschalen 45 der Bildschirmeinheit 2 gelagert, wobei ein Lagerblock 46 eine einstellbare Klemmung im Sinne einer schwergängigen Lagerung des Tragarms 3 in den Lagerschalen 45 vorsieht. Die Kraft der Klemmung durch den Lagerblock 46 kann durch in Fig. 7 nicht näher dargestellte Klemmschrauben bewerkstelligt werden, mit denen der Lagerblock 46 innerhalb des Gehäuses 43 gemäß der Darstellung in Fig. 7 nach links, zum Tragarm 3 hin, gezogen wird.

Um die gewünschten End-Schwenkpositionen gemäß Fig. 7 (unter einem Winkel von 10° zur Vertikalebene 44) bzw. unter 65° zur Vertikalebene 44 (Fig. 8) genau zu definieren, können im Bereich der Lagerschalen 45 bzw. des Tragarms 3 in der Zeichnung nicht näher veranschaulichte Anschläge vorgesehen werden, die paarweise in den beiden Endpositionen aneinander zur Anlage kommen und ein weiteres Verschwenken über die beiden gezeigten Endpositionen hinaus verhindern.

Die Bildschirmeinheit 2 kann zusätzlich zum eigentlichen Monitor (Touchscreen) 9 auch eine Webcam-Videokamera 47 samt Beleuchtung (s. außer Fig. 7 auch Fig. 2) sowie weiters in Fig. 7 nur ganz schematisch angedeutete weitere Komponenten, wie einen Kontroller 48 und einen Lautsprecher 49, enthalten. Dabei ist es auch denkbar, eine Stereo-Lautsprecher-Anordnung vorzusehen, vgl. auch Fig. 4

## Patentansprüche

1. Vorrichtung (1) zur Informationswiedergabe, Unterhaltung und/oder Datenverarbeitung, mit zumindest einer verstellbar angebrachten Bildschirmeinheit (2), die an einer vertikalen Tragsäule (4) über einen mit der Tragsäule verbundenen, von dieser seitlich abstehenden horizontalen Tragarm (3) seitlich auskragend und höhenverstellbar angeordnet ist, und mit einer Eingabeeinrichtung, **dadurch gekennzeichnet, dass** die Tragsäule (4) in einem Sockelgehäuse (6) gelagert und über eine Antriebseinheit (28) höhenverstellbar ist, und dass die Bildschirmeinheit (2) direkt an dem fest mit der Tragsäule (4) verbundenen horizontalen Tragarm (3) um dessen Achse neigbar gelagert ist.

2. Vorrichtung nach Anspruch 1, **dadurch gekennzeichnet, dass** die Antriebseinheit (28) als gesondertes Modul ausgeführt ist.

3. Vorrichtung nach Anspruch 1 oder 2, **dadurch gekennzeichnet, dass** die Antriebseinheit (28) einen Spindeltrieb (29) aufweist.

4. Vorrichtung nach einem der Ansprüche 1 bis 3, **dadurch gekennzeichnet, dass** das Sockelgehäuse (6) eine Computereinheit (22) enthält.

5. Vorrichtung nach einem der Ansprüche 1 bis 4, **dadurch gekennzeichnet, dass** das Sockelgehäuse eine Geldeingabeeinheit (23) enthält.

6. Vorrichtung nach Anspruch 4 oder 5, **dadurch gekennzeichnet, dass** die Computereinheit (22) und/oder Geldeingabeeinheit (23) in Modulbauweise ausgeführt ist/sind.

7. Vorrichtung nach einem der Ansprüche 1 bis 6, **dadurch gekennzeichnet, dass** das Sockelgehäuse (6) an seiner Oberseite eine Tischplatte (15) aufweist, die eine Durchtrittsöffnung für die Tragsäule enthält.

8. Vorrichtung nach einem der Ansprüche 1 bis 7, **dadurch gekennzeichnet, dass** das Sockelgehäuse (6) bodenseitig mit einer seitlich wegragenden Bodenplatte (7) versehen ist.

9. Vorrichtung nach Anspruch 8, **dadurch gekennzeichnet, dass** die Bodenplatte (7) eine z.B. durch Kantung vorgesehene Fußstütze (11) aufweist.

10. Vorrichtung nach einem der Ansprüche 1 bis 9, **dadurch gekennzeichnet, dass** das Sockelgehäuse (6) zumindest an einer Bodenkante (14) zumindest eine drehbar gelagerte Rolle (13) oder dgl. aufweist.

11. Vorrichtung nach einem der Ansprüche 1 bis 10, **dadurch gekennzeichnet, dass** die Bildschirmeinheit (2) einen Touchscreenmonitor (9) aufweist.

12. Vorrichtung nach einem der Ansprüche 1 bis 11, **dadurch gekennzeichnet, dass** die Bildschirmeinheit (2) einen integrierten Lautsprecher (49) aufweist.

13. Vorrichtung nach einem der Ansprüche 1 bis 12, **dadurch gekennzeichnet, dass** die Bildschirmeinheit (2) eine integrierte Bildaufnahmeeinheit, insbesondere Videokamera (47), enthält.

14. Vorrichtung nach einem der Ansprüche 1 bis 13, **dadurch gekennzeichnet, dass** die Bildschirmeinheit (2) mit einem zugehörigen Kontroller (48), gegebenenfalls mit weiteren zugehörigen Komponenten, als Modul ausgeführt ist.

15. Vorrichtung nach einem der Ansprüche 1 bis 14, **dadurch gekennzeichnet, dass** die Bildschirmeinheit (2) mit Hilfe eines Schlosses (10) am Tragarm (3) gesichert ist.
